# EUROPEAN PATENT SPECIFICATION

(11) **EP 2 106 175 B1**
(45) Date of publication and mention of the grant of the patent: **24.01.2018**
(21) Application number: 08300155.2
(22) Date of filing: 26.03.2008
(51) Int. Cl.: H04W 24/02

(54) **Method for optimizing the configuration of a network element and network element of a communication network**
Verfahren zur Optimierung der Konfiguration eines Netzwerkelements und Netzwerkelement eines Kommunikationsnetzwerks
Procédé pour l'optimisation de la configuration d'un élément de réseau et élément de réseau d'un réseau de communication

(43) Date of publication of application: 30.09.2009
(73) Proprietor: ALCATEL LUCENT, 92100 Boulogne-Billancourt (FR)
(72) Inventor: Leclerc, Brice, 91290, Arpajon (FR); Bousquet, Thierry, 92140, Clamart (FR); Marcé, Olivier, 91300, Massy (FR); Butin, Jean-Pierre, 91700, Villiers sur Orge (FR)
(74) Representative: Wetzel, Emmanuelle

(56) References cited:
- US-B1- 6 185 418
- US-B1- 6 185 437

## Description

### BACKGROUND OF THE INVENTION

The invention relates to a method for optimizing the configuration of a network element of a communication network. The network element provides service to an area of said communication network. The service is provided according to a current configuration of said network element. The invention also relates to a network element in a communication network. Preferably, the communication network is a wireless communication network. The network element provides wireless service to an area of said wireless communication network. The wireless service is provided according to a current configuration of said network element.

A communication network can be any communication network and the network element is a network element configured to provide the service to a part of said network. In this context the network element can for example be a switch or router which for example comprises configuration with respect to a switching matrix or routing table.

A wireless communication network is for example a GSM, UMTS, LTE, WiMAX (Worldwide Interoperability for Microwave Access), WiFi network. The wireless service in an area of such a wireless communication network is provided by a network element, such as a base station or a wireless access point, that has to be configured to provide the wireless service. The network element has to be configured to provide wireless service to the mobile units in the area of service of the network element. The optimal configuration of a network element in a wireless communication network usually varies with time, depending for example on the usage of the network and the availability of its resources.

The computation of an optimal configuration for a network element can be time consuming and requires expertise and possibly a lot of resources. The time needed to compute and download an optimal configuration to a network element does not permit to react to short time events which may require faster adaptation to new network conditions.

In the United States Patent Application Publication US 2005/0254455 A1 a method of optimizing cellular wireless communication networks is described. The described method detects traffic and radio propagation data from the communication network and evaluates the traffic distribution in-between cells. The network configuration is then varied in a model of the communication network to obtain an optimized network configuration. The obtained optimized network configuration is then transferred to the wireless communication network and activated.

Solutions exist to download a new configuration from an operations and maintenance center (OMC) of a wireless communication network to a network element. A new configuration is computed in the operations and maintenance centre, downloaded to the network equipment and activated at the network equipment. Another solution used is to embed algorithms of optimization of the configuration in the network element. The algorithms are usable to compute an optimization of the configuration of the network element. This solution is usually only capable to calculate optimization with low complexity.

US Patent 6,185,437 discloses a method for performing a reconfiguration of a cellular telecommunication network. Each base station controller, and an operator support system, each includes a database containing pre stored sets of parameters or cell profiles. If one of these call profiles is suitable for use in a reconfiguration, it can be selected at the operator support system and then retrieved from the database in each affected base station controller. A simple command needs to be sent to the base station controller and not the whole file containing all of the cell parameters. US6,185,418 describes an adaptive digital radio communications architecture which can be reconfigured by reprogramming a programmable device. The programmable device may use a Programmable Logic Device (PLD) to perform digital communications processing functions of the transmitter or the receiver of a radio communications system, for example by using a Field Programmable Gate Array (FPGA).

### OBJECT OF THE INVENTION

An object of the invention is to provide a method for optimizing the configuration of a network element of a communication network. A further object of the invention is to provide a corresponding network element and computing device in a communication network.

### SUMMARY OF THE INVENTION

These objects and other objects are solved by the features of the independent claims. Features of preferred embodiments of the invention are subject matter of the dependent claims.

According to one aspect of the invention two or more configurations of the network element are computed. The computation of the two or more configurations is preferably done at a computing device in the communication network. Preferably multiple configurations are computed for each network element in the communication network. Each of the two or more configurations that are computed for the network element or preferably each network element in the communication network is well suited for a frequent repetitive or well-known case of network usage. Examples of parameters that are changed or tuned by a configuration are for instance maximum or minimum power emission, timers and thresholds to trigger events relatively to measurements, uplink SIR (Signal Interference Ratio) target, neighbouring cells list etc.

The two or more configurations are received at the network element for which they have been computed. Preferably, two or more configurations are computed for more than one network element of the communication network and received at more than one network element of the communication network. The two or more configurations are received at the network element for which they have been computed. The two or more configurations are stored at the network element or the network elements. In the network element where now two or more configurations are stored one of said configurations is selected and applied by the network element. This includes an activation of the configuration. The activated selected configuration is the new current configuration of the network element. Preferably more than one or even each network element in the communication network applies this method and stores selects and applies two or more predefined configurations.

According to a preferred aspect of the invention measurements of the wireless service of the area of said wireless communication network relative to the current configuration are performed. These measurements can for example be done by mobile units within the area of the wireless communication network served by the network element or by the network element itself or by other neighbouring network elements with serving areas bordering the area of the network element in question. The results of the measurements are then transmitted to the network element and form the basis for the selection of a new current configuration performed at the network element.

According to a further preferred aspect of the invention the measurements of the wireless service of the area served by the network element are transmitted from the network element and received on the network management side of the wireless communication network. The received measurements are then used to check the efficiency of the current configuration of the network element. This is preferably done at a computing device in a wireless communication network. The computing device that checks the efficiency of the current configuration of the network element is preferably the same computing device that computes the two or more predefined configurations for the network element.

According to a further preferred aspect of the invention a new set of two or more configurations for the network element are computed depending on the outcome of the above mentioned check of efficiency. A part of the previously computed configurations may still be pertinent. Then the new set of configurations is not completely new, but an improved or enhanced set of configurations. The computation of the new set of two or more configurations for the network element is preferably performed at the computing device in the wireless communication network. In a further preferred embodiment of the invention the two or more configurations are not only computed for one network element of the wireless communication network but for more, preferably even each network element in the wireless communication network. The computing device in the wireless communication network then calculates new sets of two or more configurations for the network elements or each network element in the wireless communication network. This computation depends on the outcome of a check of efficiency performed for the areas of the network elements. The check of efficiency is based on measurements transmitted to the computing device in the wireless communication network. This provides a quick adaptation mechanism, almost real-time, of the configuration. The computing device preferably comprises a user interface to enable experts to check and if necessary to influence the calculation of the configurations. Due to the user interface, humans, e. g. experts are also able to access the measurements transmitted to the computing device and to check and influence in this respect the efficiency of the calculated configurations.

According to another aspect of the invention a network element of a wireless communication network provides wireless service to an area of the wireless communication network, the wireless service being provided according to a current configuration of the network element. The network element comprises means to receive and means to store two or more of its configurations and means to activate said means to apply one of the two or more configurations as a new current configuration. The selection of one of the stored configurations can for example be done autonomously by the NE or by remote command from the OMC. This allows a rapid reaction to changing conditions in the area of wireless service provided by the network element. The two or more configurations are each adapted and well-suited for a frequent repetitive or well-known use case and can be selected and applied and activated as a new current configuration by the network element rapidly, without waiting for the download of another configuration from OMC.

According to a preferred aspect of the invention the network element comprises means to perform measurements of the wireless service of the served area of the wireless communication network. The measurements comprise for example measurements of mean call setup duration, number of attempt of pre-emption for emergency calls, number of Blind/Emergency handover from UMTS to GSM, number of inter-frequency cell reselection request from incapable HSDPA frequency to capable HSDPA frequency, number of Streaming Mobile Originating Call success, number of call setup procedures which have failed due to lack of downlink radio resources, number of call setup procedures which have failed due to lack of transport resources. The measurements performed by the network element are preferably performed in addition to measurements provided by mobile units and other, e. g. neighbouring, network elements.

According to another aspect of the invention a computing device in a wireless communication network comprises means to compute two or more configurations of a network element of the wireless communication network, where the network element provides wireless service to an area of said wireless communication network. The wireless service is provided according to a configuration of the network element. The computed configurations are well-suited for frequent repetitive or well-known usage scenarios of the wireless communication network. The configurations are computed in advance according to repetitive or well-known usage scenarios Preferably, multiple configurations are computed for one network element of the wireless communication network and multiple configurations are computed for a second, third etc. network element, preferably even for each network element providing wireless service to an area of the wireless communication network multiple configurations are computed.

According to a preferred aspect of the invention the computing device comprises means to receive measurements of the wireless service of the area for which the network element provides wireless service. The received measurements relative to a configuration of a network element running during the time of measurements are checked with respect to the efficiency of the configuration.

According to a further preferred aspect of the invention a new set of two or more configurations for the network element is computed depending on the outcome of the check of efficiency. A new set of two or more configurations may also be an updated or extended set of configurations. The new set of two or more configurations is computed according to criteria like better throughput, less call blocking, etc. As the efficiency of the current configuration of the network element is checked the configurations of the network element can be adapted to new situations. Preferably, the efficiency is repetitively checked, possibly even at given intervals to constantly keep the wireless communication network in an efficient state.

Preferably, the computing device computes multiple configurations for more than one network element providing service to an area of the wireless communication network. In a highly preferred embodiment of the invention the computing device calculates the multiple configurations for each network element providing wireless service to an area in the wireless communication network.

The invention provides the advantage that each configuration can be validated at a central unit of the wireless communication network, e. g. the computing device, before being activated. This has to be compared with complex algorithms embedded in the network element and in charge of tuning the parameters. Such algorithms are very difficult to validate, either mathematically or by exhaustive tests, before use in the network. Furthermore, computing resources in the network element which are scarce can be saved because e new configurations are computed at the computing device. Furthermore, the invention provides a possibility to react quickly to short time events which require quick adaptation of configurations of network elements providing wireless service to an area in a wireless communication network.

### BRIEF DESCRIPTION OF THE DRAWINGS

Other characteristics and advantages of the invention will become apparent in the following detailed description of preferred embodiments of the invention illustrated by the accompanying drawings given by way of nonlimiting illustrations.
Figure 1 shows a schematic overview of a wireless communication network,
Figure 2 shows a schematic overview of a train in motion and adjacent cells of a wireless communication network.

### DETAILED DESCRIPTION

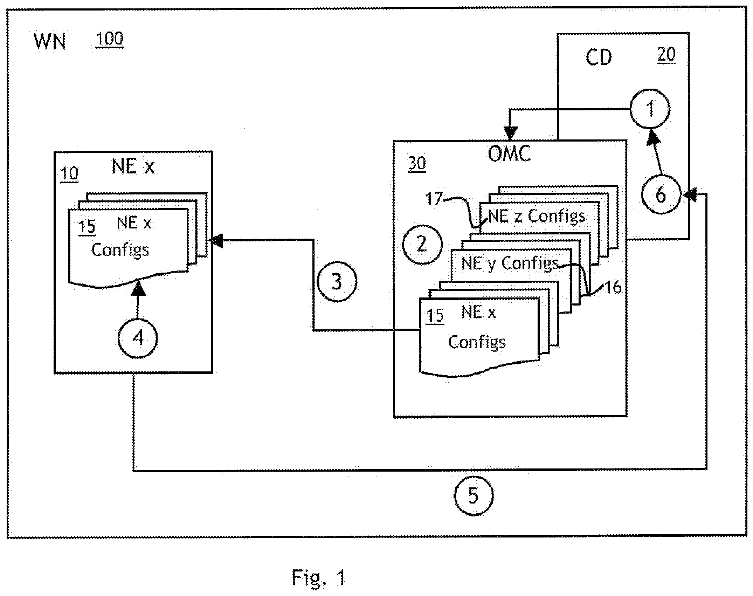

An example of the method is illustrated with respect to an example of a wireless communication network. 100 given in Figure 1. In step 1 as shown in Figure 1 a back-office optimizer comprising a computing device 20 computes two or more optimized configurations for the network equipments 10 of the wireless communication network 100. The computation at the back-office optimizer can comprise human experts who use tools to check and if necessary adapt the computation. In step 2 the OMC 30 manages a set of configurations 15, 16, 17, for each network equipment 10. In the example given in Figure 1 the OMC 30 manages the set of configurations 15 for a network equipment x, the set of configurations 16 for the network equipment y and the set of configurations 17 for the network equipment z. In step 3 the two or more configurations for each network element are downloaded to the network element. In the example given in Figure 1 the set of configurations 15 is downloaded to the network element x 10. In other examples not shown in Figure 1 the set of configurations 16 would be downloaded to the network element y and stored in network element y. The set of configuration 17 would be downloaded to the network element z 10 and stored in the network element z 10. In the example given in Figure 1 in step 3 the set of configurations 15 is downloaded to the network element x 10. The set of configurations 15 is stored in the network element x 10. In order to save resources on the network element configurations can be stored incrementally. This means that one configuration is stored completely and the other configurations of the set of configurations are stored with their differences to the set 1 configuration only.

In step 4 the network element 10 changes its configuration autonomously. This means that the network element changes its configuration without exchange of configuration with the OMC. The network element 10 changes its configuration by reading one of the stored configurations. The selection of one of the stored configurations is done according to measurements that the network element performs. An optimized configuration for the measured environment of the network element is selected. It is possible to activate configurations by remote command, for instance in case of a neighbouring cell outage, or by night to reduce power consumption. This selection step and change of configuration of the network element can be done without computation of new parameters of the network element. It can be done by reading of one of the stored configurations which comprise a set of parameters for a network element.

In step 5 the network element provides the measurements of its environment which relate to the area of wireless service to which it provides the wireless service to the computing device 20. The measurements done by the network element are relative to one of the optimized configurations, i.e. to the optimized configuration it run during the time of the measurements. In addiction to the measurements done by the network element itself measurements done by mobile units or other, e. g. neighbouring network elements, may be provided to the network element 10 and be basis of the selection step 4. Those additional measurements may also be provided to the computing device 20 in step 5.

In step 6 the back-office optimizer comprising computing device 20 checks the efficiency of the set of configurations of the network element 10. Preferably, a part of the check is done manually by human experts. If needed the set of configurations is enhanced and upgraded. If needed it is also possible that an additional configuration is created at the computing device 20 or even a new set of configurations for the network element 10 is created in step 6 of the computing device 20.

The invention thus allows quick adaptation of the network to identified adhoc problems. This increases the quality of service, the availability of the network and traffic throughput.

A further advantage of the invention is that the experience of skilled engineers can be used for the computation of two or more configurations of a network element 10. As the computation is done in the computing device 20 the computation of the sets of configurations 15, 16, 17, can be surveyed by skilled engineers on the management side of the wireless communication network.

If needed the optimized sets of configurations can also be tested and validated by experts before transmitting them to the OMC 30. They are then immediately useable by network elements 10 as soon as they have been downloaded to the network elements 10.

A further advantage of the invention is that a large combination of parameters can be optimized for each configuration of the computed sets of configuration at the computing device 20. By this, complex cases can be solved also due to the skill of experts that influence or have programmed the computation. At the same time the resources of the network elements 10 remain fully available to perform telecom activities in the wireless communication network 100. It is a further advantage of the invention that the configurations can be further enhanced by taking into account measurements received from the network elements 10.

In the following, two examples of usage for the invention will be given.

One example of usage of the invention is the power saving use case. When the mobile communication network 100 is not loaded, for example at night, a lot of resources usually stay powered on but are not used. According to the invention in order to reduce power consumption network elements 10, like base stations, can run a configuration according to the invention in a so-called idle mode. The idle mode configuration shuts down most of the transmit boards of the base station, re-allocates the bandwidth in-between the remaining active areas of wireless service, e. g. cells, and re-defines the neighbouring lists of the base stations. This can reduce energy consumption for example for big cities considerably. This use case of the invention allows for a large gain in power consumption.

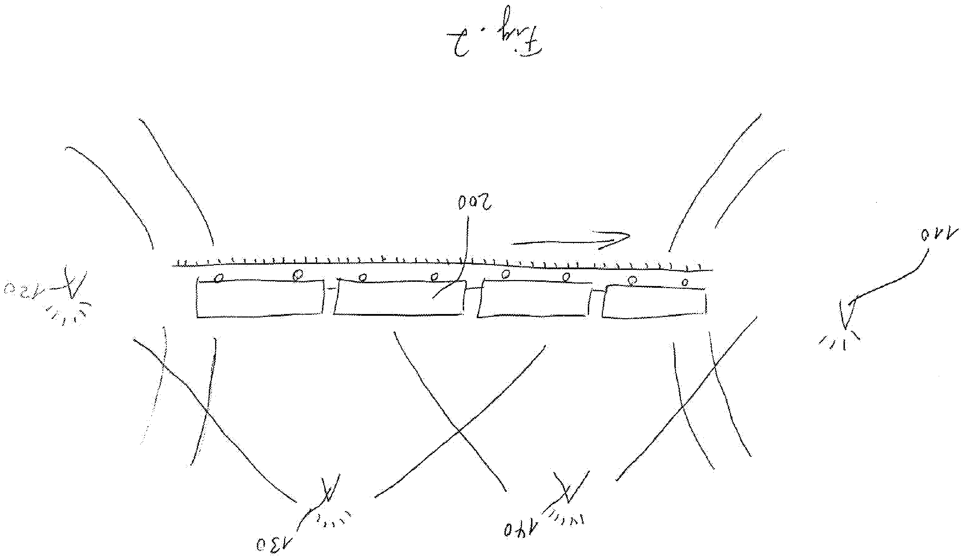

A second example of usage of the invention will be illustrated with respect to Figure 2. The example given in Figure 2 shows a train 200 travelling at a certain speed. Shown in Figure 2 are further areas of wireless service served by network element 140 and network element 130 which are along the travelling direction of the train 200. Further shown are areas of wireless service of network element 110 and areas of service of network element 120. The area of service of network element 110 is at the front of the train and the area of service of network element 120 as it is at the rear end of the train. For such a train travelling the user equipments located within the train usually perform handover all at the same time. This leads to a massive hand-over at the borders of the cell which leads to throughput problems and even lost connections, as there is a high density of people in carrying user equipments in the train. At the edge of the cells there is a high density of user equipments as all the user equipments in the cells emit maximum power, all at the same time when reaching the edge of the cell. This leads to a high level of interference. The invention offers to manage specific optimized configurations to solve the described transient troubles. One solution would be to apply a configuration to the network equipments which remove front and back cells 110 and 120 from the neighbour list of the cells 140 and 130. Front and back cells are here defined relative to the train. It is further advantageous to define a configuration which increases the footprint of the lateral cells 130 and 140. Further optimized configurations would comprise an early downgrade of high bit rates of the user equipments. A further advantageous configuration to apply would be not to perform handovers from the front cell 110 to the back cell 120 but only to lateral cells 130, 140. Thus the invention leads to the cells along the line 140, 130, to be dynamically and temporally configured with optimized configurations in order to create cell well suited radio conditions around the train in move. This use case of the invention improves network service especially in big cities with for example a lot of trains.

The proposed invention improves the efficiency of the network. It has low impact on a network equipment 10 as the network equipment 10 is able to switch from a configuration to another without outage of the network equipment 10. Furthermore a new configuration, which is already stored on the network equipment 10, can be activated quickly.

## Claims

1. Method for optimizing the configuration of a network element (10) of a communication network (100), said network element (10) providing service to an area of said communication network (100), said service being provided according to a current configuration of said network element (10), the method comprising the steps of
- computing two or more configurations (15) for said network element (10),
- receiving said two or more configurations (15) at said network element (10),
- storing said two or more configurations at said network element (10),
- performing measurements of the service of said area of said communication network (100) relative to the current configuration;
- selecting at said network element one of said two or more configurations (15) stored at said network element as a new current configuration of said network element (10), said measurements being the basis of said selection step for said new current configuration; and
- applying to said network element said new current configuration by switching to the new current configuration without outage of said network element (10).

2. Method according to claim 1, further comprising the step of transmitting said measurements from said network element (10).

3. Method according to claim 2, further comprising the step of receiving said transmitted measurements and checking the efficiency of said configurations.

4. Method according to claim 3, further comprising the step of computing a new set of two or more configurations (15) for said network element (10), depending on the outcome of said check of efficiency.

5. Method according to one of the previous claims, wherein said communication network (100) is a wireless communication network (100), said network element (10) provides wireless service to an area of said wireless communication network (100) and that said wireless service is provided according to a configuration of said network element (10).

6. Network element (10) of a communication network (100) providing service to an area of said communication network (100), said service being provided according to a current configuration of said network element (10), said network element (10) comprising:
- means to receive and means to store two or more configurations (15); means to perform measurements of the service of said area of said communication network (100);
- means to select one of said two or more configurations (15) stored in the means to store as a new current configuration based on said measurements; and
- means to apply said new current configuration by switching to said new current configuration without outage of the network element (10).

7. Network element (10) according to claim 6, wherein the network element (10) is a network element of a wireless communication network (100), providing wireless service to an area of said wireless communication network (100) and that said wireless service is provided according to a current configuration of said network element (10).

## Patentansprüche

1. Verfahren zum Optimieren der Konfiguration eines Netzwerkelements (10) eines Kommunikationsnetzwerks (100), wobei besagtes Netzwerkelement (10) einen Dienst für einen Bereich von besagtem Kommunikationsnetzwerk (100) bereitstellt, wobei der Dienst gemäß einer aktuellen Konfiguration von besagtem Netzwerkelement (10) bereitgestellt wird, wobei das Verfahren die folgenden Schritte umfasst:
- Berechnen von zwei oder mehr Konfigurationen (15) für besagtes Netzwerkelement (10),
- Empfangen von zwei oder mehr Konfigurationen (15) an besagtem Netzwerkelement (10),
- Speichern von zwei oder mehr Konfigurationen an besagtem Netzwerkelement (10),
- Durchführen von Messungen des Dienstes von besagtem Bereich des besagtem Kommunikationsnetzwerks (100) bezüglich der aktuellen Konfiguration;
- Auswählen an besagtem Netzwerkelement von einem der zwei oder mehr Konfigurationen (15), die an besagtem Netzwerkelement als neue aktuelle Konfiguration von besagtem Netzwerkelement (10) gespeichert sind, wobei besagte Messungen die Basis des besagten Auswahlschritts für die besagte neue aktuelle Konfiguration bilden; und
- Anwenden der besagten neuen aktuellen Konfiguration auf besagtes Netzwerkelement durch Umschalten auf die neue Konfiguration ohne Ausfall von besagtem Netzwerkelement (10).

2. Verfahren nach Anspruch 1, weiterhin umfassend den Schritt des Übertragens von besagten Messungen von besagtem Netzwerkelement (10).

3. Verfahren nach Anspruch 2, weiterhin umfassend den Schritt des Empfangens von besagten übertragenen Messungen und des Überprüfens der Effizienz von besagten Konfigurationen.

4. Verfahren nach Anspruch 3, weiterhin umfassend den Schritt des Berechnens von einem neuen Satz von zwei oder mehr Konfigurationen (15) für besagtes Netzwerkelement (10), in Abhängigkeit von dem Ergebnis von besagter Überprüfung der Effizienz.

5. Verfahren nach einem der vorstehenden Ansprüche, wobei besagtes Kommunikationsnetzwerk (100) ein drahtloses Kommunikationsnetzwerk (100) ist, wobei besagtes Netzwerkelement (10) einen drahtlosen Dienst für einen Bereich von besagtem drahtlosen Kommunikationsnetzwerk (100) bereitstellt und wobei dieser besagte drahtlose Dienst gemäß einer Konfiguration von besagtem Netzwerkelement (10) bereitgestellt wird.

6. Netzwerkelement (10) eines Kommunikationsnetzwerks (100), das einen Dienst für einen Bereich von besagtem Kommunikationsnetzwerk (100) bereitstellt, wobei besagter Dienst gemäß einer aktuellen Konfiguration von besagtem Netzwerkelement (10) bereitgestellt wird, wobei das Netzwerkelement (10) umfasst:
- Mittel zum Empfangen und Mittel zum Speichern von zwei oder mehr Konfigurationen (15);
- Mittel zum Durchführen von Messungen des Dienstes von besagtem Bereich des besagtem Kommunikationsnetzwerks (100);
- Mittel zum Auswählen von einem der zwei oder mehr Konfigurationen (15), die gespeichert sind in den Mitteln zum Speichern als eine neue aktuelle Konfiguration, beruhend auf besagten Messungen; und
- Mittel zum Anwenden der besagten neuen aktuellen Konfiguration ohne Ausfall de Netzwerkelements (10).

7. Netzwerkelement (10) nach Anspruch 6, wobei das Netzwerkelement (10) ein Netzwerkelement eines drahtlosen Kommunikationsnetzwerks (100) ist, das einen drahtlosen Dienst für einen Bereich von besagtem drahtlosen Kommunikationsnetzwerk (100) bereitstellt, und wobei dieser besagte drahtlose Dienst gemäß einer aktuellen Konfiguration von besagtem Netzwerkelement (10) bereitgestellt wird.

## Revendications

1. Procédé d'optimisation de la configuration d'un élément de réseau (10) d'un réseau de communication (100), ledit élément de réseau (10) fournissant un service à une zone dudit réseau de communication (100), ledit service étant fourni conformément à une configuration actuelle dudit élément de réseau (10), le procédé comprenant les étapes suivantes
- calculer au moins deux configurations (15) pour ledit élément de réseau (10),
- recevoir lesdites au moins deux configurations (15) au niveau dudit élément de réseau (10),
- stocker lesdites au moins deux configurations au niveau dudit élément de réseau (10),
- effectuer des mesures du service de ladite zone dudit réseau de communication (100) par rapport à la configuration actuelle ;
- sélectionner au niveau dudit élément de réseau une configuration parmi lesdites au moins deux configurations (15) stockées au niveau dudit élément de réseau en tant que nouvelle configuration actuelle dudit élément de réseau (10), lesdites mesures étant la base de ladite étape de sélection pour ladite nouvelle configuration actuelle ; et
- appliquer audit élément de réseau ladite nouvelle configuration actuelle en basculant sur la nouvelle configuration actuelle sans panne dudit élément de réseau (10).

2. Procédé selon la revendication 1, comprenant en outre l'étape de transmission desdites mesures à partir dudit élément de réseau (10).

3. Procédé selon la revendication 2, comprenant en outre l'étape de réception desdites mesures transmises et de vérification de l'efficacité desdites configurations.

4. Procédé selon la revendication 3, comprenant en outre l'étape de calcul d'un nouvel ensemble d'au moins deux configurations (15) pour ledit élément de réseau (10), en fonction du résultat de ladite vérification de l'efficacité.

5. Procédé selon l'une des revendications précédentes, dans lequel ledit réseau de communication (100) est un réseau de communication sans fil (100), ledit élément de réseau (10) fournit un service sans fil à une zone dudit réseau de communication sans fil (100) et ledit service sans fil est fourni conformément à une configuration dudit élément de réseau (10).

6. Élément de réseau (10) d'un réseau de communication (100) fournissant un service à une zone dudit réseau de communication (100), ledit service étant fourni conformément à une configuration actuelle dudit élément de réseau (10), ledit élément de réseau (10) comprenant :
- des moyens de réception et des moyens de stockage d'au moins deux configurations (15) ;
- des moyens pour effectuer des mesures du service de ladite zone dudit réseau de communication (100) ;
- des moyens pour sélectionner une configuration parmi lesdites au moins deux configurations (15) stockées dans les moyens de stockage en tant que nouvelle configuration actuelle sur la base desdites mesures ; et
- des moyens pour appliquer ladite nouvelle configuration actuelle en basculant sur ladite nouvelle configuration actuelle sans panne de l'élément de réseau (10).

7. Élément de réseau (10) selon la revendication 6, l'élément de réseau (10) étant un élément de réseau d'un réseau de communication sans fil (100), fournissant un service sans fil à une zone dudit réseau de communication sans fil (100) et ledit service sans fil est fourni conformément à une configuration actuelle dudit élément de réseau (10).
